# EUROPÄISCHE PATENTSCHRIFT

(11) **EP 4 027 782 B1**
(45) Veröffentlichungstag und Bekanntmachung des Hinweises auf die Patenterteilung: **19.07.2023**
(21) Anmeldenummer: 20771786.9
(22) Anmeldetag: 04.09.2020
(51) Int. Cl.: A01M 7/00

(54) **VERFAHREN ZUM AUSBRINGEN EINES SPRITZMITTELS AUF EINE LANDWIRTSCHAFTLICHE FLÄCHE**
METHOD OF DISTRIBUTING SPRAY LIQUID ON AN AGRICULTURAL SURFACE
PROCÉDÉ DE DISTRIBUTION D'UN AGENT LIQUIDE SUR UNE SURFACE AGRICOLE

(30) Priorität: 11.09.2019 DE 102019213779
(43) Veröffentlichungstag der Anmeldung: 20.07.2022
(73) Patentinhaber: Robert Bosch GmbH, 70442 Stuttgart (DE)
(72) Erfinder: MEIL, Oliver, 71701 Schwieberdingen (DE); GLASBRENNER, Jochen, 70469 Stuttgart (DE)
(86) Internationale Anmeldenummer: PCT/EP2020/074691
(87) Internationale Veröffentlichungsnummer: WO 2021/048001

(56) Entgegenhaltungen:
- DE-A1- 4 132 637
- DE-A1-102017 210 804
- US-A1- 2014 021 267
- US-A1- 2016 044 862

## Beschreibung

### Stand der Technik

Die Erfindung betrifft ein Verfahren zum Ausbringen eines Spritzmittels auf eine landwirtschaftliche Fläche mittels einer Spritzdüseneinheit einer landwirtschaftlichen Spritzvorrichtung sowie eine Steuereinheit und eine landwirtschaftliche Spritzvorrichtung zum Ausbringen eines Spritzmittels nach Gattung der unabhängigen Ansprüche.

Viele heutzutage kommerziell erhältliche Feldspritzen applizieren Pflanzenschutzmittel flächendecken auf dem Feld. Eine Unterscheidung in Bereiche die behandelt werden müssen oder nicht, findet dabei oftmals nicht statt. Zukünftige Feldspritzen könnten eine bedarfsgerechte Applikation von Pflanzenschutzmitteln in Abhängigkeit der Verunkrautung durchführen. Hierzu ist es notwendig während der Überfahrt über das zu behandelnde Feld eine Auswertung des Unkrautbefalls in Echtzeit vorzunehmen. Für die korrekte Auswertung werden spezielle Bildverarbeitungsalgorithmen verwendet, die die Unkräuter auf dem Feld detektieren. Des Weiteren sollte insbesondere eine Kontamination der Unkrautpflanze mit einer zu geringen Menge (Mindermenge) an Pflanzenschutzmittel vermieden werden, um keine zusätzlichen Resistenzen von Pflanzen gegenüber Pflanzenschutzmitteln zu erzeugen.

Heutige Zerstäuberdüsen mit den das Pflanzenschutzmittel auf dem zu behandelten Feld ausgebracht werden, sind durch folgende technische Größen charakterisiert: Spraywinkel (Austrittswinkel Spray aus Düse), Querverteilung (Verteilung Spray in Querrichtung), Längsverteilung (Verteilung Spray in Bewegungsrichtung) Spraytiefe, Ausbringmenge in Abhängigkeit von Druck und Medium, Tropfenspektrum, Verdrehwinkel der Spritzdüse.

Die Spraytiefe hat für eine bedarfsgerechte Applikation eine besondere Bedeutung. Wird das Pflanzenschutzmittel flächig ausgebracht oder ein Spot mit Pflanzenschutzmittel besprüht und bewegt sich dabei die Feldspritze in Bewegungsrichtung, muss das Spray über die gesamte Spraytiefe überfahren werden um 100% der eingestellten Menge auf der Fläche zu erreichen. Wird der Sprayprozess beendet oder gestartet, wird innerhalb der Spraytiefe das Feld mit Mindermenge behandelt. Geht man davon aus, dass die Spraytiefe konstant ist, wird der Anteil an Mindermengen auf dem Feld umso größer, je kleiner das besprühte Feld in Bewegungsrichtung der Feldspritze ist und umso häufiger ein- und ausgeschaltet wird. Bereiche von Mindermengen sollten jedoch wie vorangehend erwähnt vermieden werden, um Resistenzen von Pflanzen gegenüber Pflanzenschutzmitteln zu vermeiden.

Die DE 10 2017 210 804 A1 offenbart ein Verfahren zum Ausbringen eines Spritzmittels auf einen Beikrautbereich in Abhängigkeit von einer ermittelten Pflanzenkennzahl mittels einer Spritzvorrichtung.

### Offenbarung der Erfindung

Gegenstand der vorliegenden Erfindung ist ein Verfahren zum Ausbringen eines Spritzmittels auf eine landwirtschaftliche Fläche mittels einer Spritzdüseneinheit einer landwirtschaftlichen Spritzvorrichtung, mit den Schritten:
- Erfassen eines ersten Feldabschnitts der landwirtschaftlichen Fläche mittels einer optischen Erfassungseinheit, um eine erste Bildinformation von dem ersten Feldabschnitt zu erhalten;
- Identifizieren von Pflanzen in einem ersten Auswertebereich der erhaltenen ersten Bildinformation des ersten Feldabschnitts mittels einer Steuereinheit;
- Ermitteln einer ersten Pflanzenkennzahl des ersten Auswertebereichs unter Verwendung der identifizierten Pflanzen in dem ersten Auswertebereich mittels der Steuereinheit; und
- Ausbringen des Spritzmittels mit einer definierten Mindestmenge pro Fläche auf den im Wesentlichen gesamten ersten Feldabschnitt und einen im Wesentlichen gesamten in Bewegungsrichtung der landwirtschaftlichen Spritzvorrichtung an den ersten Feldabschnitt angrenzenden zweiten Feldabschnitt der landwirtschaftlichen Fläche in Abhängigkeit von der ermittelten ersten Pflanzenkennzahl des ersten Auswertebereichs mittels der Spritzdüseneinheit der landwirtschaftlichen Spritzvorrichtung.

Gegenstand der vorliegenden Erfindung ist ferner eine Steuereinheit die dazu eingerichtet ist, folgende Schritte durchzuführen und/oder zu steuern:
- Identifizieren von Pflanzen in einem ersten Auswertebereich einer erhaltenen ersten Bildinformation eines mittels einer optischen Erfassungseinheit erfassten ersten Feldabschnitts einer landwirtschaftlichen Fläche;
- Ermitteln einer ersten Pflanzenkennzahl des ersten Auswertebereichs unter Verwendung der identifizierten Pflanzen in dem ersten Auswertebereich; und
- Ausgeben eines Steuersignals an eine Spritzdüseneinheit einer landwirtschaftlichen Spritzvorrichtung in Abhängigkeit von der ermittelten ersten Pflanzenkennzahl des ersten Auswertebereichs, um ein Spritzmittel mit einer definierten Mindestmenge pro Fläche auf den im Wesentlichen gesamten ersten Feldabschnitt und einen im Wesentlichen gesamten in Bewegungsrichtung der landwirtschaftlichen Spritzvorrichtung an den ersten Feldabschnitt angrenzenden zweiten Feldabschnitt der landwirtschaftlichen Fläche auszubringen.

Gegenstand der vorliegenden Erfindung ist außerdem eine landwirtschaftliche Spritzvorrichtung zum Ausbringen eines Spritzmittels auf eine landwirtschaftliche Fläche mit zumindest einer Spritzdüseneinheit, zumindest einer optischen Erfassungseinheit und einer vorangehend beschriebenen Steuereinheit.

Das Verfahren ist für landwirtschaftliche Zwecke gedacht. Unter einem landwirtschaftlichen Zweck kann im Rahmen der vorliegenden Erfindung ein Zweck verstanden werden, der auf eine wirtschaftliche Kultivierung von Nutzpflanzen gerichtet ist.

Das Ausbringen des Spritzmittels erfolgt hierbei auf einer landwirtschaftlichen Fläche bzw. einer landwirtschaftlich genutzten Fläche. Hierunter können ein Feld oder eine Anbaufläche für Pflanzen oder auch eine Parzelle einer solchen Anbaufläche verstanden werden. Die landwirtschaftliche Fläche kann somit eine Ackerfläche, ein Grünland oder eine Weide sein. Die Pflanzen können beispielsweise Nutzpflanzen, deren Frucht landwirtschaftlich genutzt wird (beispielsweise als Nahrungsmittel, Futtermittel oder als Energiepflanze) sowie Beikräuter, Unkräuter und Ungräser umfassen.

Bevorzugt werden alle Schritte des Verfahrens während einer Bewegung, insbesondere einer Fahrt oder eines Fluges der landwirtschaftlichen Spritzvorrichtung über der landwirtschaftlichen Fläche durchgeführt.

Vorteilhafterweise ist die landwirtschaftliche Spritzvorrichtung ausgebildet, das Verfahren automatisiert durchzuführen, um eine schnelle, zuverlässige und effiziente Behandlung eines Feldes zu ermöglichen.

Die landwirtschaftliche Spritzvorrichtung kann insbesondere Teil einer landwirtschaftlichen Feldspritze bzw. eines Pflanzenschutzgerätes sein oder als eine landwirtschaftliche Feldspritze bzw. ein Pflanzenschutzgerät ausgebildet sein. Die landwirtschaftliche Spritzvorrichtung kann eine mobile Einheit umfassen oder auf einer mobilen Einheit angeordnet sein, wobei die mobile Einheit insbesondere als Landfahrzeug und/oder Luftfahrzeug und/oder Anhänger ausgebildet sein kann. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein. Die landwirtschaftliche Spritzvorrichtung kann insbesondere eine gezogene Feldspritze, eine selbstfahrende Feldspritze oder eine Anbaufeldspritze sein. Die landwirtschaftliche Spritzvorrichtung kann auch an einer hydraulischen Vorrichtung einer landwirtschaftlichen Arbeitsmaschine angebaut sein. Denkbar ist auch, dass die landwirtschaftliche Spritzvorrichtung auf einer Ladefläche einer landwirtschaftlichen Arbeitsmaschine aufgebaut ist. Alternativ kann die Spritzvorrichtung an der landwirtschaftlichen Arbeitsmaschine angehängt sein. Die landwirtschaftliche Spritzvorrichtung bzw. die Feldspritze kann mindestens einen Spritzmitteltank zur Aufnahme des Spritzmittels aufweisen. Die landwirtschaftliche Spritzvorrichtung bzw. die Feldspritze kann hierbei auch eine Mischeinheit aufweisen, welche direkt auf der landwirtschaftlichen Spritzvorrichtung ein Spritzmittelkonzentrat mit Wasser zu dem auszubringenden Spritzmittel (an)mischt.

Das Spritzmittel ist insbesondere eine Spritzflüssigkeit. Das Spritzmittel kann ein landwirtschaftliches Präparat bzw. Pflanzenschutzmittel (PSM), insbesondere ein Pflanzenschutzmittelkonzentrat aufweisen oder sein. Das Spritzmittel kann demnach ein Pestizid, wie bspw. ein Herbizid, Fungizid oder ein Insektizid aufweisen. Das Spritzmittel kann jedoch auch ein Düngemittel, insbesondere ein Düngemittelkonzentrat aufweisen oder sein. Das Spritzmittel kann hierbei einen Wachstumsregulator aufweisen. Das Spritzmittel kann ein granulares Wirkmittel, welches mit einer Trägerflüssigkeit vermischt wurde, aufweisen. Die Spritzflüssigkeit kann bspw. ausgebildet sein als: Flüssigkeit, Suspension, Emulsion, Lösung oder eine Kombination daraus. Die Spritzflüssigkeit ist bevorzugt als mit Wasser verdünntes Pflanzenschutzmittel oder mit Wasser verdünntes Düngemittel ausgebildet. Die Spritzflüssigkeit kann demnach bspw. eine Spritzbrühe sein.

Das Ausbringen des Spritzmittels kann insbesondere mittels einer Fördereinheit durchgeführt werden. Hierbei kann die Fördereinheit ausgebildet sein, eine Flüssigkeit und/oder ein Granulat unter Druck zu fördern bzw. zu leiten, insbesondere zu dosieren. Demnach kann die Fördereinheit bspw. jeweils ein/eine/einen oder mehrere Pumpen, Förderpumpen, Dosierpumpen, Druckspeicher, Förderschnecken, Ventile, Blenden etc. umfassen.

Die Spritzdüseneinheit weist bevorzugt jeweils mindestens eine Spritzdüse zum Ausbringen des Spritzmittels und mindestens ein Ventil zum Steuern bzw. Regeln der ausgebrachten Spritzmittelmenge auf. Demnach ist die Spritzdüseneinheit steuerbar bzw. betätigbar ausgebildet. Das Ventil kann in der Spritzdüse angeordnet bzw. integriert sein. Das Ventil kann jedoch auch der Spritzdüse vorgeschaltet, d.h. (in Strömungsrichtung des Spritzmittels) stromaufwärts der Spritzdüse angeordnet sein. Die Spritzdüseneinheit kann jedoch auch mehrere Spritzdüsen mit jeweils einem vorgeschalteten Ventil aufweisen. Die Spritzdüseneinheit kann ferner auch mehrere Spritzdüsen mit nur einem den Spritzdüsen vorgeschalteten Ventil aufweisen, so dass bei Betätigung des Ventils das Spritzmittel mittels aller Spritzdüsen der Spritzdüseneinheit ausgebracht wird. Das Ventil kann als ein pulsweitenmoduliertes Ventil (PWFM-Ventil), pulsweitenfrequenzmoduliertes Ventil (PWFM) oder als ein Proportionalventil ausgebildet sein. Die Spritzdüseneinheit kann als Teilbreite eines Düsensystems der landwirtschaftlichen Spritzvorrichtung ausgebildet sein. Die Spritzdüseneinheiten können einzeln bzw. separat und/oder in definierten Gruppen bzw. Verbänden und/oder alle gemeinsam ansteuerbar sein. Die Spritzdüsen jeder Spritzdüseneinheit können einzeln bzw. separat und/oder in definierten Gruppen bzw. Verbänden und/oder alle gemeinsam ansteuerbar sein.

Die optische Erfassungseinheit kann zumindest eine multispektrale und/oder hyperspektrale und/oder Infrarot- und/oder Kamera und/oder 3D-Kamera umfassen. Die optische Erfassungseinheit kann ausgebildet sein, Bilder im NIR und/oder visuellen Bereich zu erfassen bzw. aufzunehmen. Optische Erfassungseinheiten können ausgebildet sein miteinander zu kommunizieren.

Die Spritzdüseneinheit bzw. die Spritzdüseneinheiten und die optische Erfassungseinheit bzw. die optischen Erfassungseinheiten sind bevorzugt an einem Spritzgestänge der landwirtschaftlichen Spritzvorrichtung angeordnet.

Der erfasste Feldabschnitt kann ein Erfassungsabschnitt bzw. ein erfasster Bildabschnitt einer optischen Erfassungseinheit sein. Der erfasste Feldabschnitt ist bevorzugt der gesamte in dem Sichtfeld der optischen Erfassungseinheit erfasste Feldabschnitt. Demnach weisen der erste Feldabschnitt, der zweite Feldabschnitt und die weiteren Feldabschnitte in Bewegungsrichtung sowie benachbarte Feldabschnitte im Wesentlichen die gleiche Länge und im Wesentlichen die gleiche Breite auf. Der erste Feldabschnitt, der zweite Feldabschnitt und die weiteren Feldabschnitte bilden (in Bewegungsrichtung) einen Streifen der landwirtschaftlichen Fläche aus.

Die Bildinformation ist bevorzugt ein Bild bzw. Abbild des erfassten Feldabschnitts.

Das Verfahren wird bzw. die Verfahrensschritte werden verständlicherweise wiederholt durchgeführt. Hierbei werden die Schritte des Erfassens der Feldabschnitte bevorzugt in einem definierten, insbesondere festen oder in einem der Fahrgeschwindigkeit der landwirtschaftlichen Spritzvorrichtung angepassten Zeitintervall durchgeführt bzw. wiederholt durchgeführt. D.h., mit anderen Worten, dass die Feldabschnitte mit einer definierten oder einer geschwindigkeitsabhängigen Wiederholrate erfasst werden.

Unter einem Identifizieren von Pflanzen in einem Auswertebereich einer erhaltenen Bildinformation eines Feldabschnitts kann beispielsweise das Bestimmen des Vorhandenseins von Pflanzen in dem Feldabschnitt verstanden werden, insbesondere ohne dass dabei eine Klassifizierung der einzelnen Pflanzen erfolgt. Der Schritt des Identifizierens von Pflanzen kann ein Erfassen eines Farbanteils, insbesondere eines Infrarotanteils in dem Feldabschnitt bzw. Bildabschnitt umfassen. Hierbei können mittels der optischen Erfassungseinheit, bspw. anhand eines vorbestimmten NDVI-Wertes (Normalized Differenced Vegetation Index, er wird aus Reflexionswerten im nahen infraroten und sichtbaren roten Wellenlängenbereich des Lichtspektrums gebildet) Pflanzen erfasst werden, indem Biomasse bzw. vitale Pflanzen und Pflanzenteile vom Erdboden unterschieden wird.

Ein Auswertebereich ist hierbei der Bereich, welcher zur Ermittlung der Pflanzenkennzahl mittels der Steuereinheit ausgewertet wird. Der Auswertebereich kann die gesamte Bildinformation bzw. das gesamte Bild, d.h. den gesamten erfassten Feldabschnitt umfassen. Ein Auswertebereich kann jedoch auch nur einen definierten Teilbereich von der Bildinformation bzw. dem Bild, d.h. von dem Feldabschnitt umfassen. Der erste Auswertebereich weist bevorzugt in Bewegungsrichtung im Wesentliche die gleiche Länge auf wie die erfasste erste Bildinformation.

Die Pflanzenkennzahl kann einen Bedeckungsgrad von pflanzlichem Material und/oder eine Menge an pflanzlichem Material und/oder eine Anzahl von identifizierten Pflanzen repräsentieren bzw. sein. Der Bedeckungsgrad kann über das Verhältnis von durch pflanzlichem Material bedeckter Fläche zu Gesamtfläche definiert werden. Der Bedeckungsgrad ist demnach das Verhältnis der Fläche des bewachsenen Bereiches zum jeweiligen gesamten Auswertebereich. Dazu kann die Anzahl der Pixel in dem jeweiligen Auswertebereich bestimmt werden, an denen pflanzliches Material detektiert wird. Demnach kann mittels der Pflanzenkennzahl eine Maßzahl für den Befall abgeleitet werden, in Abhängigkeit derer entschieden wird, ob und ggf. wie der entsprechende Feldabschnitt besprüht bzw. behandelt wird.

Somit kann die erste Pflanzenkennzahl einen Bedeckungsgrad des ersten Feldabschnitts von pflanzlichem Material und/oder eine Menge an pflanzlichem Material in dem ersten Feldabschnitt und/oder eine Anzahl von identifizierten Pflanzen in dem ersten Feldabschnitt repräsentieren oder sein.

Der Schritt des Identifizierens von Pflanzen kann den Schritt des Ermittelns der Pflanzenkennzahl umfassen. Der Schritt des Identifizierens von Pflanzen und der Schritt des Ermittelns der Pflanzenkennzahl können auch zusammen ausgeführt werden (bspw., wenn das Spritzmittel ausgebracht werden soll, sobald eine Pflanze identifiziert wird).

Im Schritt des Ausbringens wird bei einer positiven "Sprühentscheidung" eine definierte Mindestmenge des Spritzmittels pro Fläche auf den gesamten ersten Feldabschnitt und einen im Wesentlichen gesamten in Bewegungsrichtung der landwirtschaftlichen Spritzvorrichtung an den ersten Feldabschnitt angrenzenden zweiten Feldabschnitt der landwirtschaftlichen Fläche ausgebracht. Die Feldabschnitte, auf denen Spritzmittel ausgebracht wird, werden nachfolgend auch besprühte bzw. behandelte Feldabschnitte genannt. Hierbei wird bevorzugt im Schritt des Ausbringens das Spritzmittel bei Erreichung und/oder Unterschreitung und/oder Überschreitung eines definierten Schwellwertes für die erste Pflanzenkennzahl ausgebracht. D.h., mit anderen Worten, dass der Schritt des Ausbringens des Spritzmittels ein Vergleichen der ermittelten Pflanzenkennzahl mit einem Schwellwert umfassen kann, wobei bei Erreichen und/oder Unterschreiten und/oder Überschreiten des Schwellwerts der Schritt des Ausbringens ausgeführt wird. Der Schwellwert kann manuell eingebbar sein, oder durch ein externes System, z.B. einem Cloudservice, vorgegeben werden. In Abhängigkeit der Kultur im Feld, des Wachstumsstadiums und des verwendeten Spritzmittel bzw. Pflanzenschutzmittels kann hierbei eine sog. Spritzregel hinterlegt sein, d.h. ein Zusammenhang zwischen einer bestimmten Pflanzenkennzahl und der Entscheidung, ob und wieviel Pflanzenschutzmittel appliziert werden soll. Als Beispiel könnte die Regel lauten: "Wenn der Bedeckungsgrad im Beikrautbereich >5%, dann wird appliziert".

Hierbei wird im Schritt des Ausbringens das Spritzmittel insbesondere unabhängig von einer Auswertung einer zweiten Bildinformation des zweiten Feldabschnitts, insbesondere unabhängig von einer Identifizierung von Pflanzen in einem zweiten Auswertebereich der zweiten Bildinformation und/oder von einer Ermittlung einer zweiten Pflanzenkennzahl eines zweiten Auswertebereichs der zweiten Bildinformation auf den zweiten Feldabschnitt ausgebracht. D.h., mit anderen Worten, dass das Spritzmittel "pauschal" auch auf den zweiten Feldabschnitt ausgebracht wird, wenn zuvor der erste Feldabschnitt behandelt wurde.

Bevorzugt wird im Schritt des Ausbringens das Spritzmittel in Bewegungsrichtung kontinuierlich bzw. durchgängig zumindest von einer Anfangsgrenze des ersten Feldabschnitts bis zumindest zu
- einer Endgrenze des zweiten Feldabschnitts; und/oder
- der letzten identifizierten Pflanze des weiteren Auswertebereichs und/oder einer Endgrenze des weiteren Auswertebereichs; und/oder
- der letzten identifizierten Pflanze eines nachfolgenden weiteren Auswertebereichs und/oder einer Endgrenze eines nachfolgenden weiteren Auswertebereichs, sofern das Spritzmittel auf im Wesentlichen den/die gesamten vorherigen weiteren Feldabschnitt/Feldabschnitte ausgebracht wurde,
ausgebracht. Demzufolge bleiben die jeweiligen Spritzdüseneinheiten bzw. die zugeordneten Ventile innerhalb der Grenzen im Wesentlichen durchgehend bzw. kontinuierlich geöffnet. D.h., mit anderen Worten, dass auch nachfolgende weitere Feldabschnitte betrachtet werden, wenn z.B. der an den zweiten Feldabschnitt angrenzende weitere (dritte) Feldabschnitt im Wesentlichen vollständig behandelt wird und in dem nachfolgenden weiteren (vierten) Feldabschnitt behandlungswürdige Pflanzen identifiziert werden. Zusammenfassend wird im ersten Feldabschnitt bei Bedarf gesprüht, im darauffolgenden zweiten Feldabschnitt immer, im dritten Feldabschnitt soweit wie notwendig. Wenn aber im dritten Feldabschnitt im Wesentlichen vollständig gesprüht wird, dann im vierten Feldabschnitt soweit wie notwendig. Wenn auch hier im Wesentlichen vollständig gesprüht wird, dann im fünften soweit wie notwendig, usw.

Hierbei ist es vorteilhaft, wenn in dem Schritt des Ausbringens das Spritzmittel im Wesentlichen gleichmäßig auf den gesamten ersten Feldabschnitt und den gesamten zweiten Feldabschnitt ausgebracht wird. Unter einem gleichmäßigen Ausbringen kann im Rahmen der vorliegenden Erfindung ein Ausbringen mit der gleichen bzw. konstanten vordefinierten Ausbringmenge pro Fläche verstanden werden. Unter einer vordefinierten Ausbringmenge kann eine vorab bzw. zu Beginn der Behandlung festgelegt Ausbringmenge verstanden werden. Die definierte Ausbringmenge kann voreingestellt bzw. vorab eingebbar sein.

Die Steuereinheit umfasst eine Recheneinheit zum Verarbeiten von Signalen oder Daten, zumindest eine Speichereinheit zum Speichern von Signalen oder Daten, zumindest eine Kommunikationsschnittstelle zum Einlesen von Daten, insbesondere zum Empfangen von Bildinformationen und zum Ausgeben von Daten, insbesondere Steuersignalen an eine Einheit, insbesondere einen Aktor. Die Recheneinheit kann beispielsweise ein Signalprozessor, ein Mikrocontroller oder dergleichen sein, wobei die Speichereinheit ein Flash-Speicher, ein EPROM oder eine magnetische Speichereinheit sein kann. Die Kommunikationsschnittstelle kann ausgebildet sein, um Daten drahtlos und/oder leitungsgebunden einzulesen oder auszugeben, wobei eine Kommunikationsschnittstelle, die leitungsgebundene Daten einlesen oder ausgeben kann, diese Daten bspw. elektrisch oder optisch aus einer entsprechenden Datenübertragungsleitung einlesen oder in eine entsprechende Datenübertragungsleitung ausgeben kann.

Das erfindungsgemäße Verfahren stellt eine optimierte Betriebsstrategie bereit, welche es ermöglich, den Anteil der mit Mindermenge behandelten Feldabschnitte einer landwirtschaftlichen Fläche zu minimieren, um so die einleitend beschriebene Gefahr einer Pflanzenschutzmittel-Resistenz der Pflanzen auf der landwirtschaftlichen Fläche zu vermeiden bzw. zu minimieren. Dies wird insbesondere dadurch erzielt, dass die Anzahl der zusammenhängend besprühten Feldabschnitte und damit die Ein- und Ausschaltvorgänge der Düseneinheiten reduziert werden.

Es ist ferner vorteilhaft, wenn die zusätzlichen Schritte vorgesehen sind:
- Erfassen eines in Bewegungsrichtung an den zweiten Feldabschnitt angrenzenden weiteren Feldabschnitts der landwirtschaftlichen Fläche mittels der optischen Erfassungseinheit, um eine weiteren Bildinformation des weiteren Feldabschnitts zu erhalten;
- Identifizieren von Pflanzen in einem weiteren Auswertebereich der erhaltenen weiteren Bildinformation des weiteren Feldabschnitts mittels der Steuereinheit;
- Ermitteln einer weiteren Pflanzenkennzahl des weiteren Auswertebereichs unter Verwendung der identifizierten Pflanzen in dem weiteren Auswertebereich mittels der Steuereinheit; und
- Fortsetzen des Schritts des Ausbringens des Spritzmittels mit der definierten Mindestmenge pro Fläche auf
   o den weiteren Feldabschnitt bis zumindest einschließlich einer in Bewegungsrichtung letzten identifizierten Pflanze des weiteren Auswertebereichs; und/oder
   o den weiteren Feldabschnitt bis zumindest einschließlich des weiteren Auswertebereichs; und/oder
   o im Wesentlichen den gesamten weiteren Feldabschnitt
   in Abhängigkeit von der ermittelten weiteren Pflanzenkennzahl mittels der Spritzdüseneinheit der landwirtschaftlichen Spritzvorrichtung.

Hierbei ist es insbesondere vorteilhaft, wenn der weitere Auswertebereich in Bewegungsrichtung im Wesentliche die gleiche Länge wie oder eine kleinere Länge als die erfasste weitere Bildinformation aufweist. Bevorzugt wird im Schritt des Fortsetzens des Schritts des Ausbringens das Spritzmittel bei Erreichung und/oder Unterschreitung und/oder Überschreitung eines definierten Schwellwertes für die weitere Pflanzenkennzahl ausgebracht. Die weitere Pflanzenkennzahl kann insbesondere einen Bedeckungsgrad des weiteren Feldabschnitts von pflanzlichem Material und/oder eine Menge an pflanzlichem Material in dem weiteren Feldabschnitt und/oder eine Anzahl von identifizierten Pflanzen in dem weiteren Feldabschnitt repräsentieren. Hierbei wird bevorzugt im des Fortsetzens des Schritts des Ausbringens das Spritzmittel bei einem Bedeckungsgrad größer Null und/oder bei Identifizierung zumindest einer Pflanze ausgebracht.

Durch diese Maßnahme können zum einen die Anzahl der zusammenhängend besprühten Feldabschnitte und damit die Ein- und Ausschaltvorgänge der Düseneinheiten weiter reduziert werden, wodurch die Gefahr einer Pflanzenschutzmittel-Resistenz der Pflanzen auf der landwirtschaftlichen Fläche weiter reduziert wird. Ferner kann diese Gefahr durch ein Ausbringen des Spritzmittels bei einem Bedeckungsgrad größer Null und/oder bei Identifizierung zumindest einer Pflanze minimiert werden.

Es ist außerdem vorteilhaft, wenn ein alternativer Schritt des Ausbringens des Spritzmittels mit der definierten Mindestmenge pro Fläche auf einen der Feldabschnitte vorgesehen ist in Abhängigkeit davon,
- ob zumindest eine Pflanze in dem jeweiligen Feldabschnitt (hierbei ist nicht der benachbarte Feldabschnitt gemeint) mittels der Steuereinheit identifiziert bzw. erkannt wird, und
- ob im in einem quer zur Bewegungsrichtung angrenzenden benachbarten Feldabschnitt mittels einer benachbarten Spritzdüseneinheit der landwirtschaftlichen Spritzvorrichtung Spritzmittel ausgebracht wird und/oder werden soll.

Hierbei ist es insbesondere vorteilhaft, wenn im alternativen Schritt des Ausbringens das Spritzmittel auf im Wesentlichen den gesamten jeweiligen Feldabschnitt ausgebracht wird, sofern in dem jeweiligen Feldabschnitt zumindest eine Pflanze, insbesondere einer definierten Größe identifiziert bzw. erkannt wird, und in dem benachbarten Feldabschnitt mittels der benachbarten Spritzdüseneinheit Spritzmittel ausgebracht wird und/oder werden soll.

Da auch quer (rechts und links) zu den besprühten bzw. behandelten Feldabschnitten Mindermengen auftreten können, besteht auch hier die Gefahr der Resistenzbildung. Um die Gefahr der Restenzbildung in diesen quer zur Bewegungsrichtung angrenzenden benachbarten Feldabschnitten zu reduzieren, wird durch diese Maßnahme das Spritzmittel alternativ auch dann auf einen der Feldabschnitte ausgebracht, falls ein quer angrenzender Feldabschnitt behandelt wird und ferner in dem jeweiligen Feldabschnitt mindestens zumindest eine Pflanze identifiziert bzw. erkannt wird.

### Zeichnungen

### Zeichnungen

Die Erfindung wird nachstehend anhand der beigefügten Zeichnungen beispielhaft näher erläutert. Es zeigen:
- Fig. 1: eine schematische Darstellung einer landwirtschaftlichen Spritzvorrichtung;
- Fig. 2: eine schematische Darstellung von Feldabschnitten einer landwirtschaftlichen Fläche zur Erläuterung einer Betriebsstrategie;
- Fig. 3a, b: eine schematische Darstellung von Feldabschnitten zur Erläuterung einer weiteren Ausführungsform der Betriebsstrategie; und
- Fig. 4a, b: eine schematische Darstellung von Feldabschnitten zur Erläuterung einer weiteren Ausführungsform der Betriebsstrategie; und
- Fig. 5: ein Ablaufdiagramm eines Verfahrens.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

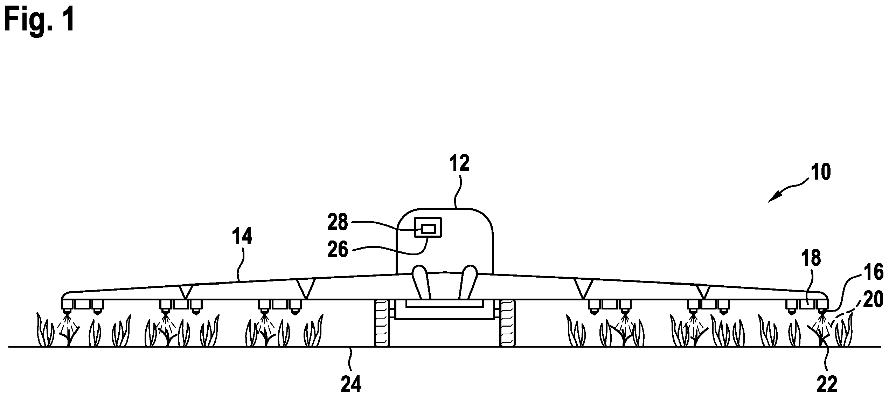

In Fig. 1 ist eine schematische Darstellung einer landwirtschaftlichen Spritzvorrichtung dargestellt, welche in ihrer Gesamtheit mit dem Bezugszeichen 10 versehen ist.

Die landwirtschaftliche Spritzvorrichtung 10 ist als Feldspritze 10 ausgebildet. Die Feldspritze 10 ist an einem mobilen Landfahrzeug 12 angeordnet, welches als Zugmaschine 12 bzw. Traktor 12 ausgebildet ist.

Die landwirtschaftliche Spritzvorrichtung 10 weist ein Spritzgestänge 14 auf. An dem Spritzgestänge 14 sind Spritzdüseneinheiten 16 und optische Erfassungseinheiten 18 angeordnet. Die Spritzdüseneinheiten 16 sind ausgebildet ein Spritzmittel 20 auf Pflanzen 22 bzw. Beikräuter 22 einer landwirtschaftlichen Fläche 24 auszubringen. Die optische Erfassungseinheiten 18 sind als optische Kameras 18 ausgebildet. Die optischen Kameras 18 umfassen jeweils eine Filtereinheit, um einen Farbanteil wie beispielsweise den roten Farbanteil einer erhaltenen bzw. erfassten Bildinformation bzw. eines erfassten Bildes zu extrahieren, um Pflanzen 22 bzw. Beikräuter 22 zu erfassen.

Die landwirtschaftliche Spritzvorrichtung 10 weist ferner eine (nicht gezeigte) Fördereinheit auf, mittels derer die Ausbringmenge bzw. eine Wirkmittelmenge in dem auszubringenden Spritzmittel 20 einstellbar bzw. variierbar ist.

Die landwirtschaftliche Spritzvorrichtung 10 weist außerdem eine Steuereinheit 26 auf, welche mit den optischen Kameras 18 verbunden ist, um Informationen von diesen zu empfangen. Die Steuereinheit 26 weist eine Recheneinheit 28 auf, welche ausgebildet ist, Berechnungsschritte bzw. Bildverarbeitungsschritte zur Durchführung des erfindungsgemäßen Verfahrens auszuführen. Die Steuereinheit 26 ist ferner ausgebildet, ein Steuersignal derart auszugeben, dass das Spritzmittel 20 in Abhängigkeit von der ermittelten Pflanzenkennzahl mittels der Spritzdüseneinheiten 16 ausgebracht wird.

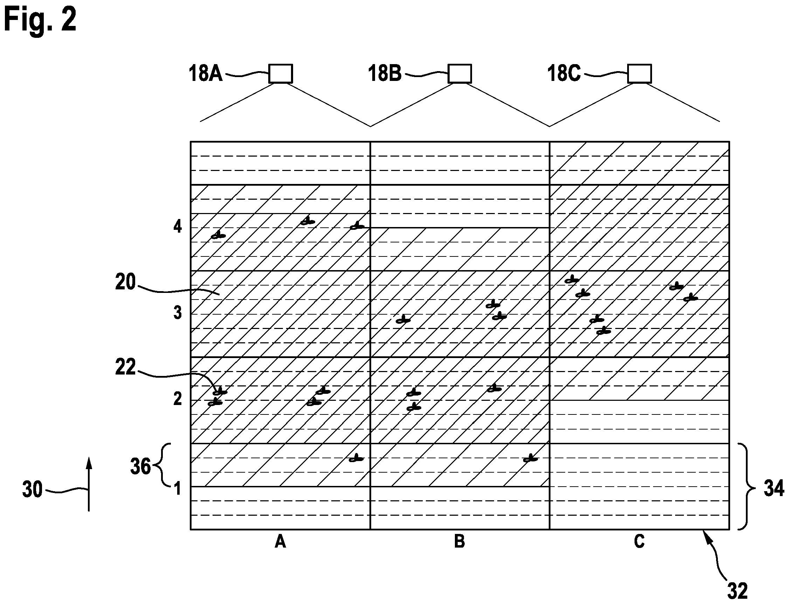

Zu Veranschaulichung des Verfahrens bzw. der Betriebsstrategie zeigt Fig. 2 einen Ausschnitt der landwirtschaftlichen Fläche 24, welcher mittels dreier optischer Erfassungseinheiten 18A, 18B, 18C (18A-C) bzw. Kameras 18A, 18B, 18C (18A-C) der landwirtschaftlichen Spritzvorrichtung 10 während einer Überfahrt des landwirtschaftlichen Spritzvorrichtung 10 in der Bewegungsrichtung 30 erfasst wurde. Die Kameras 18A-C sind nebeneinander quer zur Bewegungsrichtung 30 an dem Spritzgestänge 14 angeordnet. Hierbei wurden Feldabschnitte A1, A2, A3, A4 (A1-4) mittels der Kamera 18A, Feldabschnitte B1, B2, B3, B4 (B1-4) mittels der Kamera 18B und Feldabschnitte C1, C2, C3, C4 (C1-4) mittels der Kamera 18C erfasst.

Zunächst wurden die Feldabschnitte A1, B1, C1 erfasst, wobei jeweils eine Bildinformation 32 bzw. ein Bild 32 erzeugt wurde. In einem Auswertebereich 34 der jeweiligen erhaltenen Bildinformation 32, welcher im gezeigten Ausführungsbeispiel das gesamte jeweilige Bild 32 bzw. den gesamten jeweiligen Feldabschnitt A1, B1, C1 umfasst, wurden dann mittels einer Steuereinheit 26 Pflanzen 22 gesucht, um jeweils eine Pflanzenkennzahl zu ermitteln und in Abhängigkeit davon das Spritzmittel 20 mit einer definierten Mindestmenge pro Fläche gemäß der Betriebsstrategie auszubringen.

Im gezeigten Ausführungsbeispiel ist die Pflanzenkennzahl eine Anzahl an identifizierten Pflanzen 22, wobei der Schwellwert auf drei Pflanzen definiert wurde. D.h., mit anderen Worten, dass erst bei Identifizierung von drei oder mehr Pflanzen 22 in einem Auswertebereich 34 das Spritzmittel 20 mittels der entsprechenden Spritzdüseneinheit 16 ausgebracht wird bzw. eine positive "Sprayentscheidung" vorliegt. In keinem der Feldabschnitte A1, B1, C1 wurden Pflanzen identifiziert, weshalb das Spritzmittel 20 mit der definierten Mindestmenge pro Fläche gemäß der Betriebsstrategie nicht die Feldabschnitte A1, B1, C1 ausgebracht wurde.

Analog hierzu wurden anschließend die in Bewegungsrichtung 30 angrenzenden Feldabschnitte A2, B2, C2 erfasst. Wie aus Fig. 2 ersichtlich, wurde Spritzmittel 20 mit einer definierten Mindestmenge pro Fläche auf im Wesentlichen den Feldabschnitt A2 und auf im Wesentlichen den gesamten Feldabschnitt B2 mittels der entsprechenden Spritzdüseneinheit 16 ausgebracht, nicht jedoch auf den Feldabschnitt C2. Dies liegt daran, die Pflanzenkennzahl bzw. die Anzahl der identifizierten Pflanzen 22 in den Feldabschnitten A2, B2 den Schwellwert erreicht bzw. überschreitet.

Um nun die die Anzahl der zusammenhängend besprühten Feldabschnitte und damit den Anteil der mit Mindermenge behandelten Feldabschnitte zu reduzieren, wurde das Spritzmittel 20 "pauschal" ferner auch auf die im Wesentlichen gesamten in Bewegungsrichtung 30 an die behandelten Feldabschnitt A2, B2 angrenzenden Feldabschnitte A3, B3, unabhängig davon, ob dort die Pflanzenkennzahl überschritten wurde oder nicht (im Feldabschnitt A3 wurden keine Pflanzen 22 identifiziert). Hierbei wurden die Feldabschnitt A2, A3 und B2, B3 kontinuierlich mittels der entsprechenden Spritzdüseneinheit 16 besprüht bzw. behandelt. Da in dem Auswertebereich 34 des Bilds 32 des Feldabschnitts C3 die Pflanzenkennzahl überschritten wurde, wurde auch auf den gesamten Feldabschnitt C3 das Spritzmittel 20 ausgebracht.

Als nächstes wurden die in Bewegungsrichtung 30 angrenzenden Feldabschnitte A4, B4, C4 erfasst. Analog zu dem vorangehend erläuterten Vorgehen wurde das Spritzmittel "pauschal" mit der definierten Mindestmenge pro Fläche auch auf den Feldabschnitt C4 ausgebracht, obwohl dort keine Pflanzen 22 identifiziert wurden. Auch hierbei wurden die Feldabschnitt C3, C4 kontinuierlich mittels der entsprechenden Spritzdüseneinheit 16 besprüht bzw. behandelt.

Gemäß einer bevorzugten Ausführungsform des Verfahrens wurde nach Schritt des "pauschalen" Ausbringens des Spritzmittels 20 wieder eine Pflanzenkennzahl des Auswertebereichs 34 des Bilds 32 von dem nachfolgend erfassten angrenzenden Feldabschnitt A4, B4 ermittelt. Diese Pflanzenkennzahl kann eine unterschiedliche zu der zuvor genannten sein bzw. einen unterschiedlichen Schwellwert aufweisen. Im gezeigten Ausführungsbeispiel handelt es sich jedoch um die gleichen Pflanzenkennzahlen und Schwellwerte. Da im Feldabschnitt B4 keine Pflanze 22 identifiziert wurde, wurde dort das Spritzmittel 20 mit der definierten Mindestmenge pro Fläche nicht ausgebracht. Im Auswertebereich 34 des Bilds32 von dem Feldabschnitt A4 wurde jedoch die Schwelle überschritten, so dass der Schritt bzw. der Vorgang des Ausbringens des Spritzmittels 20 mit der definierten Mindestmenge pro Fläche auf den Feldabschnitt A4 fortgesetzt wurde. Im Gegensatz zu den beiden vorangehenden behandelten Feldabschnitten A2, A3, welche im Wesentlichen vollflächig besprüht wurden, wurde im Feldabschnitt A4 gemäß Betriebsstrategie das Spritzmittel 20 lediglich bis einschließlich der in Bewegungsrichtung 30 letzten identifizierten Pflanze 22 ausgebracht.

Zu Verdeutlichung der Mindermengenproblematik sind in Fig. 2 ferner Bereiche 36 dargestellt bzw. gekennzeichnet, in denen Mindermengen ausgebracht wurden.

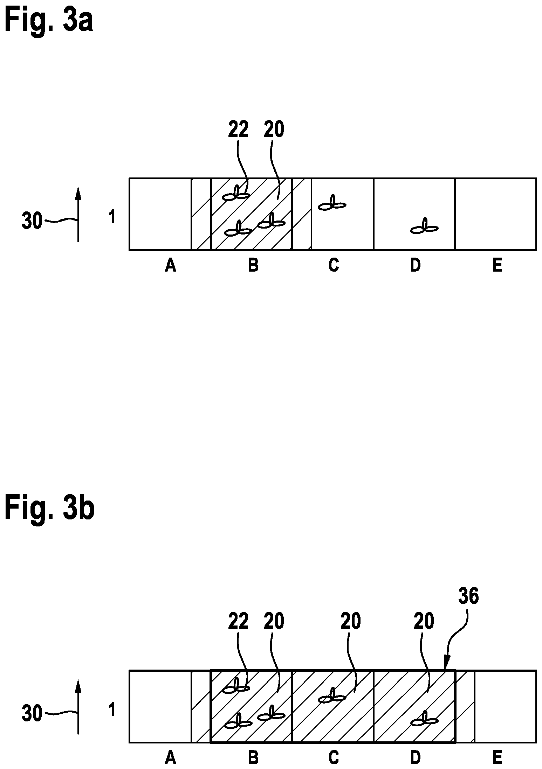

Fig. 3a, b zeigen nebeneinander angeordnete und jeweils mittels einer optischen Erfassungseinheit 18 erfasste Feldabschnitte A1, B1, C1, D1, E1 (A1-E1) als Vergleich der zuvor erläuterten Betriebsstrategie und einer weiteren Ausführungsform der Betriebsstrategie. Die Schwelle für die Anzahl der identifizierten Pflanzen 22, ab der Spritzmittel 22 ausgebracht wird, beträgt auch hier drei Pflanzen 22. Bei der Betriebsstrategie gemäß Fig. 3a erfolgt das Ausbringen des Spritzmittel 20 unabhängig davon, was in den quer zur Bewegungsrichtung 30 angrenzenden Feldabschnitt A1-E1 geschieht. Daher wurde lediglich auf den Feldabschnitt B1 Spritzmittel 20 mit der definierten Mindestmenge pro Fläche ausgebracht.

Im Gegensatz dazu, sieht die gemäß Fig. 3b gezeigte Betriebsstrategie vor, dass alternativ das Spritzmittel 20 mit der definierten Mindestmenge pro Fläche auf einen der Feldabschnitte A1-E1 auch dann ausgebracht wird, wenn in dem jeweiligen Feldabschnitt A1-E1 zumindest eine Pflanze 22 identifiziert wird und in einem quer zur Bewegungsrichtung 30 angrenzenden Feldabschnitt A1-E1 Spritzmittel 20 ausgebracht wird und/oder werden soll. Daher wurde das Spritzmittel 20 mit der definierten Mindestmenge pro Fläche ferner auf die Feldabschnitte C1 und D1 mittels jeweils einer Spritzdüseneinheit 16 ausgebracht.

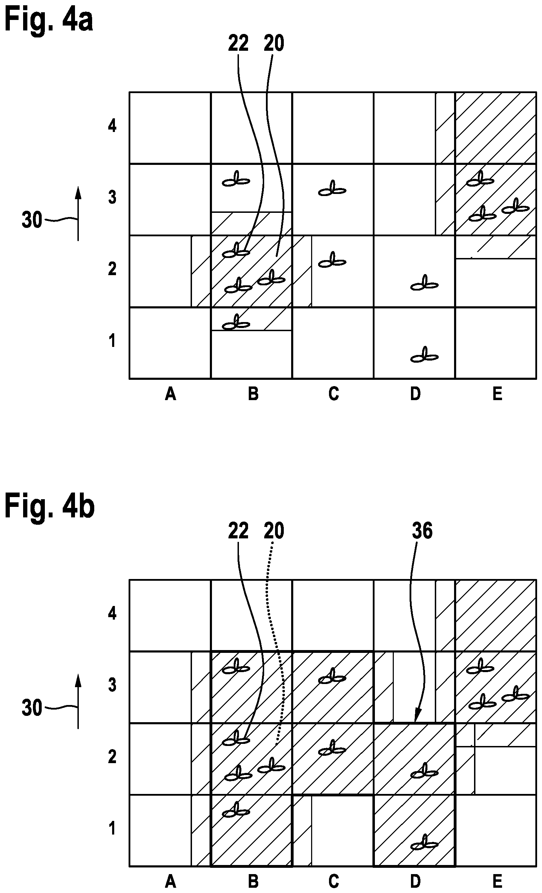

Analog zu den Betriebsstrategien gemäß Fig. 3a, b veranschaulichen die Fig. 4a, b den Vergleich der beiden Betriebsstrategien, wobei zur weiteren Minimierung der Gefahr einer Pflanzenschutzmittel-Resistenz die Schwelle für die Anzahl der identifizierten Pflanzen 22, ab der Spritzmittel 22 mit der definierten Mindestmenge pro Fläche auf einen Feldabschnitt A1-4, B1-4, C1-4, D1-4, E1-4 (A1-E4) ausgebracht wird, hier auf eine Pflanze 22 festgelegt wurde.

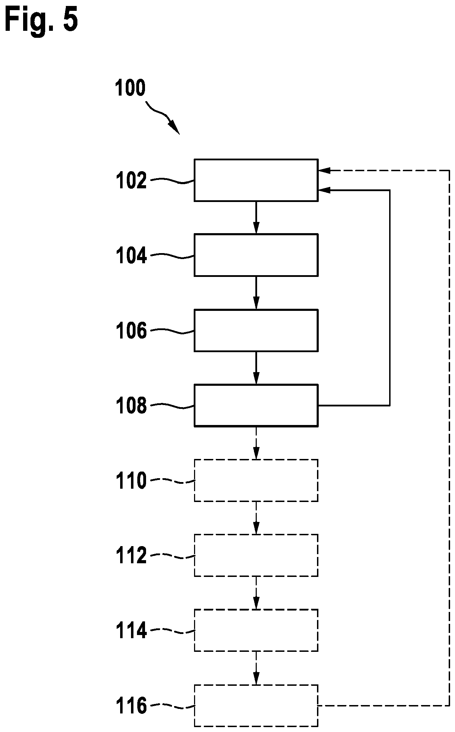

Fig. 5 zeigt ein Ablaufdiagramm eines Verfahrens 100 zum Ausbringen eines Spritzmittels 20 auf eine landwirtschaftliche Fläche 24 mittels einer Spritzdüseneinheit 16 einer landwirtschaftlichen Spritzvorrichtung 10. Das Verfahren 100 umfasst einen Schritt des Erfassens 102 eines ersten Feldabschnitts A1-E4 der landwirtschaftlichen Fläche 24 mittels einer optischen Erfassungseinheit 18, 18A-C, um eine erste Bildinformation 32 von dem ersten Feldabschnitt A1-E4 zu erhalten. Das Verfahren 100 umfasst ferner einen Schritt des Identifizierens 104 von Pflanzen 22 in einem ersten Auswertebereich 34 der erhaltenen ersten Bildinformation 32 des ersten Feldabschnitts A1-E4 mittels einer Steuereinheit 26. Das Verfahren 100 umfasst außerdem einen Schritt des Ermittelns 106 einer ersten Pflanzenkennzahl des ersten Auswertebereichs 34 unter Verwendung der identifizierten Pflanzen 22 in dem ersten Auswertebereich 34 mittels der Steuereinheit 26. Das Verfahren umfasst des Weiteren einen Schritt des Ausbringens 108 des Spritzmittels 20 mit einer definierten Mindestmenge pro Fläche auf den im Wesentlichen gesamten ersten Feldabschnitt A1-E4 und einen im Wesentlichen gesamten in Bewegungsrichtung 30 der landwirtschaftlichen Spritzvorrichtung 10 an den ersten Feldabschnitt A1-E4 angrenzenden zweiten Feldabschnitt A1-E4 der landwirtschaftlichen Fläche 24 in Abhängigkeit von der ermittelten ersten Pflanzenkennzahl des ersten Auswertebereichs 34 mittels der Spritzdüseneinheit 16 der landwirtschaftlichen Spritzvorrichtung 10.

Optional bzw. bevorzugt umfasst das Verfahren 100 ferner einen zusätzlichen Schritt des Erfassens 110 eines in Bewegungsrichtung 30 an den zweiten Feldabschnitt A1-E4 angrenzenden weiteren Feldabschnitts A1-E4 der landwirtschaftlichen Fläche 24 mittels der optischen Erfassungseinheit 18, 18A-C, um eine weitere Bildinformation 32 des weiteren Feldabschnitts A1-E4 zu erhalten; einen zusätzlichen Schritt des Identifizierens 112 von Pflanzen 22 in einem weiteren Auswertebereich 34 der erhaltenen weiteren Bildinformation 32 des weiteren Feldabschnitts A1-E4 mittels der Steuereinheit 26; einen zusätzlichen Schritt des Ermittelns 114 einer weiteren Pflanzenkennzahl des weiteren Auswertebereichs 34 unter Verwendung der identifizierten Pflanzen 22 in dem weiteren Auswertebereich 34 mittels der Steuereinheit 26; und einen zusätzlichen Schritt des Fortsetzens 116 des Schritts des Ausbringens 108 des Spritzmittels 20 mit der definierten Mindestmenge pro Fläche auf den weiteren Feldabschnitt A1-E4 bis zumindest einschließlich einer in Bewegungsrichtung 30 letzten identifizierten Pflanze 22 des weiteren Auswertebereichs 34; und/oder den weiteren Feldabschnitt A1-E4 bis zumindest einschließlich des weiteren Auswertebereichs 34; und/oder im Wesentlichen den gesamten weiteren Feldabschnitt A1-E4 in Abhängigkeit von der ermittelten weiteren Pflanzenkennzahl mittels der Spritzdüseneinheit 16 der landwirtschaftlichen Spritzvorrichtung 10.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (100) zum Ausbringen eines Spritzmittels (20) auf eine landwirtschaftliche Fläche (24) mittels einer Spritzdüseneinheit (16) einer landwirtschaftlichen Spritzvorrichtung (10), mit den Schritten:
- Erfassen (102) eines ersten Feldabschnitts (A1-E4) der landwirtschaftlichen Fläche (24) mittels einer optischen Erfassungseinheit (18, 18A-C), um eine erste Bildinformation (32) von dem ersten Feldabschnitt (A1-E4) zu erhalten;
- Identifizieren (104) von Pflanzen (22) in einem ersten Auswertebereich (34) der erhaltenen ersten Bildinformation (32) des ersten Feldabschnitts (A1-E4) mittels einer Steuereinheit (26);
- Ermitteln (106) einer ersten Pflanzenkennzahl des ersten Auswertebereichs (34) unter Verwendung der identifizierten Pflanzen (22) in dem ersten Auswertebereich (34) mittels der Steuereinheit (26); und
- Ausbringen (108) des Spritzmittels (20) mit einer definierten Mindestmenge pro Fläche auf den im Wesentlichen gesamten ersten Feldabschnitt (A1-E4) der landwirtschaftlichen Fläche (24) in Abhängigkeit von der ermittelten ersten Pflanzenkennzahl des ersten Auswertebereichs (34) mittels der Spritzdüseneinheit (16) der landwirtschaftlichen Spritzvorrichtung (10),
**dadurch gekennzeichnet, dass** im Schritt des Ausbringens (108) das Spritzmittel (20) mit der definierten Mindestmenge pro Fläche ferner auf einen im Wesentlichen gesamten in Bewegungsrichtung (30) der landwirtschaftlichen Spritzvorrichtung (10) an den ersten Feldabschnitt (A1-E4) angrenzenden zweiten Feldabschnitt (A1-E4) der landwirtschaftlichen Fläche (24) in Abhängigkeit von der ermittelten ersten Pflanzenkennzahl des ersten Auswertebereichs (34) mittels der Spritzdüseneinheit (16) der landwirtschaftlichen Spritzvorrichtung (10) ausgebracht wird.

2. Verfahren (100) nach Anspruch 1, **dadurch gekennzeichnet, dass** im Schritt des Ausbringens (108) das Spritzmittel (20) unabhängig von einer Auswertung einer zweiten Bildinformation des zweiten Feldabschnitts (A1-E4), insbesondere unabhängig von einer Identifizierung von Pflanzen (22) in einem zweiten Auswertebereich der zweiten Bildinformation und/oder von einer Ermittlung einer zweiten Pflanzenkennzahl eines zweiten Auswertebereichs der zweiten Bildinformation auf den zweiten Feldabschnitt (A1-E4) ausgebracht wird.

3. Verfahren (100) nach Anspruch 1 oder 2, **dadurch gekennzeichnet, dass** der erste Auswertebereich (34) in Bewegungsrichtung (30) im Wesentliche die gleiche Länge aufweist wie die erfasste erste Bildinformation (32).

4. Verfahren (100) nach einem der vorhergehenden Ansprüche,
**gekennzeichnet durch** die zusätzlichen Schritte:
- Erfassen (110) eines in Bewegungsrichtung (30) an den zweiten Feldabschnitt (A1-E4) angrenzenden weiteren Feldabschnitts (A1-E4) der landwirtschaftlichen Fläche (24) mittels der optischen Erfassungseinheit (18, 18A-C), um eine weitere Bildinformation (32) des weiteren Feldabschnitts (A1-E4) zu erhalten;
- Identifizieren (112) von Pflanzen (22) in einem weiteren Auswertebereich (34) der erhaltenen weiteren Bildinformation (32) des weiteren Feldabschnitts (A1-E4) mittels der Steuereinheit (26);
- Ermitteln (114) einer weiteren Pflanzenkennzahl des weiteren Auswertebereichs (34) unter Verwendung der identifizierten Pflanzen (22) in dem weiteren Auswertebereich (34) mittels der Steuereinheit (26); und
- Fortsetzen (116) des Schritts des Ausbringens (108) des Spritzmittels (20) mit der definierten Mindestmenge pro Fläche auf
o den weiteren Feldabschnitt (A1-E4) bis zumindest einschließlich einer in Bewegungsrichtung (30) letzten identifizierten Pflanze (22) des weiteren Auswertebereichs (34); und/oder
o den weiteren Feldabschnitt (A1-E4) bis zumindest einschließlich des weiteren Auswertebereichs (34); und/oder
o im Wesentlichen den gesamten weiteren Feldabschnitt (A1-E4)
in Abhängigkeit von der ermittelten weiteren Pflanzenkennzahl mittels der Spritzdüseneinheit (16) der landwirtschaftlichen Spritzvorrichtung (10).

5. Verfahren (100) nach Anspruch 4, **dadurch gekennzeichnet, dass** der weitere Auswertebereich (34) in Bewegungsrichtung (30) im Wesentliche die gleiche Länge wie oder eine kleinere Länge als die erfasste weitere Bildinformation (32) aufweist.

6. Verfahren (100) nach einem der vorhergehenden Ansprüche, **dadurch gekennzeichnet, dass** im Schritt des Ausbringens (108) das Spritzmittel (20) in Bewegungsrichtung (30) kontinuierlich zumindest von einer Anfangsgrenze des ersten Feldabschnitts bis zumindest zu
- einer Endgrenze des zweiten Feldabschnitts (A1-E4); und/oder
- der letzten identifizierten Pflanze (22) des weiteren Auswertebereichs (34) und/oder einer Endgrenze des weiteren Auswertebereichs (34); und/oder
- der letzten identifizierten Pflanze (22) eines nachfolgenden weiteren Auswertebereichs (34) und/oder einer Endgrenze eines nachfolgenden weiteren Auswertebereichs (34), sofern das Spritzmittel auf im Wesentlichen den/die gesamten vorherigen weiteren Feldabschnitt/Feldabschnitte (A1-E4) wurde,
ausgebracht wird.

7. Verfahren (100) nach einem der vorhergehenden Ansprüche, **dadurch gekennzeichnet, dass** im Schritt
- des Ausbringens (108) das Spritzmittel (20) bei Erreichung und/oder Unterschreitung und/oder Überschreitung eines definierten Schwellwertes für die erste Pflanzenkennzahl und/oder
- des Fortsetzens (116) des Schritts des Ausbringens (108) das Spritzmittel (20) bei Erreichung und/oder Unterschreitung und/oder Überschreitung eines definierten Schwellwertes für die weitere Pflanzenkennzahl
ausgebracht wird.

8. Verfahren (100) nach einem der vorhergehenden Ansprüche, **dadurch gekennzeichnet, dass**
- die erste Pflanzenkennzahl einen Bedeckungsgrad des ersten Feldabschnitts (A1-E4) von pflanzlichem Material und/oder eine Menge an pflanzlichem Material in dem ersten Feldabschnitt (A1-E4) und/oder eine Anzahl von identifizierten Pflanzen (22) in dem ersten Feldabschnitt (A1-E4), und/oder
- die weitere Pflanzenkennzahl einen Bedeckungsgrad des weiteren Feldabschnitts (A1-E4) von pflanzlichem Material und/oder eine Menge an pflanzlichem Material in dem weiteren Feldabschnitt (A1-E4) und/oder eine Anzahl von identifizierten Pflanzen (22) in dem weiteren Feldabschnitt (A1-E4)
repräsentiert/repräsentieren.

9. Verfahren (100) nach Anspruch 8, **dadurch gekennzeichnet, dass** im Schritt des Fortsetzens (116) des Schritts des Ausbringens (108) das Spritzmittel (20) bei einem Bedeckungsgrad größer Null und/oder bei Identifizierung zumindest einer Pflanze (22) ausgebracht wird.

10. Verfahren (100) nach einem der vorhergehenden Ansprüche, **dadurch gekennzeichnet, dass** der erste Feldabschnitt (A1-E4) und der zweite Feldabschnitt (A1-E4), insbesondere ferner der weitere Feldabschnitt (A1-E4) in Bewegungsrichtung (30) im Wesentlichen die gleiche Länge und im Wesentlichen die gleiche Breite aufweisen.

11. Verfahren (100) nach einem der vorhergehenden Ansprüche,
**gekennzeichnet durch** einen alternativen Schritt des Ausbringens (108') des Spritzmittels (20) mit der definierten Mindestmenge pro Fläche auf einen der Feldabschnitte (A1-E4) in Abhängigkeit davon,
- ob zumindest eine Pflanze (22) in dem jeweiligen Feldabschnitt (A1-E4) mittels der Steuereinheit (26) identifiziert wird, und
- ob im in einem quer zur Bewegungsrichtung (30) angrenzenden benachbarten Feldabschnitt (A1-E4) mittels einer benachbarten Spritzdüseneinheit (16) der landwirtschaftlichen Spritzvorrichtung (10) Spritzmittel (20) ausgebracht wird und/oder werden soll.

12. Verfahren (100) nach Anspruch 11, **dadurch gekennzeichnet, dass** im alternativen Schritt des Ausbringens (108') das Spritzmittel (20) auf im Wesentlichen den gesamten jeweiligen Feldabschnitt (A1-E4) ausgebracht wird, sofern in dem jeweiligen Feldabschnitt (A1-E4) zumindest eine Pflanze (22), insbesondere einer definierten Größe identifiziert wird, und in dem benachbarten Feldabschnitt (A1-E4) mittels der benachbarten Spritzdüseneinheit (16) Spritzmittel (20) ausgebracht wird und/oder werden soll.

13. Steuereinheit (26) die dazu eingerichtet ist, folgende Schritte durchzuführen und/oder zu steuern:
- Identifizieren (104) von Pflanzen (22) in einem ersten Auswertebereich (34) einer erhaltenen ersten Bildinformation (32) eines mittels einer optischen Erfassungseinheit erfassten ersten Feldabschnitts (A1-E4) einer landwirtschaftlichen Fläche (24);
- Ermitteln (106) einer ersten Pflanzenkennzahl des ersten Auswertebereichs (34) unter Verwendung der identifizierten Pflanzen (22) in dem ersten Auswertebereich (34); und
- Ausgeben eines Steuersignals an eine Spritzdüseneinheit (16) einer landwirtschaftlichen Spritzvorrichtung (10) in Abhängigkeit von der ermittelten ersten Pflanzenkennzahl des ersten Auswertebereichs (34), um ein Spritzmittel (20) mit einer definierten Mindestmenge pro Fläche auf den im Wesentlichen gesamten ersten Feldabschnitt (A1-E4) der landwirtschaftlichen Fläche (24) auszubringen,
**dadurch gekennzeichnet, dass** im Schritt des Ausgebens des Steuersignals ein Steuersignal ausgegeben wird, um das Spritzmittel (20) mit der definierten Mindestmenge pro Fläche ferner auf einen im Wesentlichen gesamten in Bewegungsrichtung (30) der landwirtschaftlichen Spritzvorrichtung (10) an den ersten Feldabschnitt (A1-E4) angrenzenden zweiten Feldabschnitt (A1-E4) der landwirtschaftlichen Fläche (24) der landwirtschaftlichen Spritzvorrichtung (10) auszubringen.

14. Landwirtschaftliche Spritzvorrichtung (10) zum Ausbringen eines Spritzmittels (20) auf eine landwirtschaftliche Fläche mit zumindest einer Spritzdüseneinheit (16), zumindest einer optischen Erfassungseinheit (18, 18A-C) und einer Steuereinheit (26) nach Anspruch 13.

## Claims

1. Method (100) for applying a spray (20) to an area of agricultural land (24) by means of a spray nozzle unit (16) of an agricultural spraying device (10), with the steps of:
- detecting (102) a first field portion (A1-E4) of the area of agricultural land (24) by means of an optical detecting unit (18, 18A-C), in order to obtain a first item of image information (32) from the first field portion (A1-E4);
- identifying (104) plants (22) in a first evaluation region (34) of the obtained first item of image information (32) of the first field portion (A1-E4) by means of a control unit (26);
- ascertaining (106) a first plant parameter of the first evaluation region (34) by means of the control unit (26) by using the identified plants (22) in the first evaluation region (34); and
- applying (108) the spray (20) at a defined minimum amount per surface area to substantially the entire first field portion (A1-E4) of the area of agricultural land (24) in dependence on the ascertained first plant parameter of the first evaluation region (34) by means of the spray nozzle unit (16) of the agricultural spraying device (10),
**characterized in that**, in the step of applying (108), the spray (20) is also applied at the defined minimum amount per surface area to substantially the entire second field portion (A1-E4) of the area of agricultural land (24) adjoining the first field portion (A1-E4) in the direction of movement (30) of the agricultural spraying device (10) in dependence on the ascertained first plant parameter of the first evaluation region (34) by means of the spray nozzle unit (16) of the agricultural spraying device (10).

2. Method (100) according to Claim 1, **characterized in that**, in the step of applying (108), the spray (20) is applied to the second field portion (A1-E4) independently of an evaluation of a second item of image information of the second field portion (A1-E4), in particular independently of an identification of plants (22) in a second evaluation region of the second item of image information and/or of an ascertainment of a second plant parameter of a second evaluation region of the second item of image information.

3. Method (100) according to Claim 1 or 2, **characterized in that** the first evaluation region (34) has substantially the same length in the direction of movement (30) as the detected first item of image information (32).

4. Method (100) according to one of the preceding claims, **characterized by** the additional steps of:
- detecting (110) a further field portion (A1-E4) of the area of agricultural land (24) adjoining the second field portion (A1-E4) in the direction of movement (30) by means of the optical detecting unit (18, 18A-C), in order to obtain a further item of image information (32) of the further field portion (A1-E4);
- identifying (112) plants (22) in a further evaluation region (34) of the obtained further item of image information (32) of the further field portion (A1-E4) by means of the control unit (26);
- ascertaining (114) a further plant parameter of the further evaluation region (34) by means of the control unit (26) by using the identified plants (22) in the further evaluation region (34); and
- continuing (116) the step of applying (108) the spray (20) at the defined minimum amount per surface area to
o the further field portion (A1-E4) up to at least including a last identified plant (22) of the further evaluation region (34) in the direction of movement (30); and/or
o the further field portion (A1-E4) up to at least including the further evaluation region (34); and/or
o substantially the entire further field portion (A1-E4)
in dependence on the ascertained further plant parameter by means of the spray nozzle unit (16) of the agricultural spraying device (10).

5. Method (100) according to Claim 4, **characterized in that** the further evaluation region (34) has substantially the same length as or a smaller length than the detected further item of image information (32) in the direction of movement (30).

6. Method (100) according to one of the preceding claims, **characterized in that**, in the step of applying (108), the spray (20) is applied continuously in the direction of movement (30) at least from a starting limit of the first field portion to at least
- an end limit of the second field portion (A1-E4); and/or
- the last identified plant (22) of the further evaluation region (34) and/or an end limit of the further evaluation region (34); and/or
- the last identified plant (22) of a following further evaluation region (34) and/or an end limit of a following further evaluation region (34), as long as the spray has been on substantially the entire previous further field portion/field portions (A1-E4).

7. Method (100) according to one of the preceding claims, **characterized in that**, in the step
- of applying (108), the spray (20) is applied when a defined threshold value for the first plant parameter is reached and/or undershot and/or overshot and/or
- of continuing (116) the step of applying (108), the spray (20) is applied when a defined threshold value for the further plant parameter is reached and/or undershot and/or overshot.

8. Method (100) according to one of the preceding claims, **characterized in that**
- the first plant parameter represents a degree of coverage of the first field portion (A1-E4) with plant material and/or an amount of plant material in the first field portion (A1-E4) and/or a number of identified plants (22) in the first field portion (A1-E4), and/or
- the further plant parameter represents a degree of coverage of the further field portion (A1-E4) with plant material and/or an amount of plant material in the further field portion (A1-E4) and/or
- a number of identified plants (22) in the further field portion (A1-E4).

9. Method (100) according to Claim 8, **characterized in that**, in the step
of continuing (116) the step of applying (108), the spray (20) is applied when there is a degree of coverage greater than zero and/or when at least one plant (22) is identified.

10. Method (100) according to one of the preceding claims, **characterized in that** the first field portion (A1-E4) and the second field portion (A1-E4), in particular also the further field portion (A1-E4), have substantially the same length and substantially the same width in the direction of movement (30).

11. Method (100) according to one of the preceding claims,
**characterized by** an alternative step of applying (108') the spray (20) at the defined minimum amount per surface area to one of the field portions (A1-E4) in dependence on
- whether at least one plant (22) in the respective field portion (A1-E4) is identified by means of the control unit (26), and
- whether spray (20) is and/or is to be applied in the in an adjacent field portion (A1-E4) adjoining transversely to the direction of movement (30) by means of an adjacent spray nozzle unit (16) of the agricultural spraying device (10).

12. Method (100) according to Claim 11, **characterized in that**, in the alternative step of applying (108'), the spray (20) is applied to substantially the entire respective field portion (A1-E4), as long as at least one plant (22), in particular of a defined size, is identified in the respective field portion (A1-E4), and spray (20) is and/or is to be applied in the adjacent field portion (A1-E4) by means of the adjacent spray nozzle unit (16).

13. Control unit (26), which is designed to carry out and/or control the following steps:
- identifying (104) plants (22) in a first evaluation region (34) of an obtained first item of image information (32) of a first field portion (A1-E4) of an area of agricultural land (24) detected by means of an optical detecting unit;
- ascertaining (106) a first plant parameter of the first evaluation region (34) by using the identified plants (22) in the first evaluation region (34); and
- outputting a control signal to a spray nozzle unit (16) of an agricultural spraying device (10) in dependence on the ascertained first plant parameter of the first evaluation region (34), in order to apply a spray (20) at a defined minimum amount per surface area to substantially the entire first field portion (A1-E4) of the area of agricultural land (24),
**characterized in that**, in the step of outputting the control signal, a control signal is output in order also to apply the spray (20) at the defined minimum amount per surface area to substantially an entire second field portion (A1-E4) of the area of agricultural land (24) of the agricultural spraying device (10) adjoining the first field portion (A1-E4) in the direction of movement (30) of the agricultural spraying device (10).

14. Agricultural spraying device (10) for applying a spray (20) to an area of agricultural land with at least one spray nozzle unit (16), at least one optical detecting unit (18, 18A-C) and a control unit (26) according to Claim 13.

## Revendications

1. Procédé (100) pour épandre un produit à pulvériser (20) sur une surface agricole (24) au moyen d'une unité à buse de pulvérisation (16) d'un dispositif de pulvérisation agricole (10), comprenant les étapes consistant à :
- détecter (102) une première partie de champ (A1-E4) de la surface agricole (24) au moyen d'une unité de détection optique (18, 18A-C) afin d'obtenir une première information d'image (32) de la première partie de champ (A1-E4) ;
- identifier (104) des plantes (22) dans une première zone d'évaluation (34) de la première information d'image (32) obtenue de la première partie de champ (A1-E4) au moyen d'une unité de commande (26) ;
- déterminer (106) un premier indice de plante de la première zone d'évaluation (34) en utilisant les plantes (22) identifiées dans la première zone d'évaluation (34) au moyen de l'unité de commande (26) ; et
- épandre (108) le produit à pulvériser (20) selon une quantité minimale définie par surface sur la première partie de champ (A1-E4) de la surface agricole (24) sensiblement dans sa totalité en fonction du premier indice de plante déterminé de la première zone d'évaluation (34) au moyen de l'unité à buse de pulvérisation (16) du dispositif de pulvérisation agricole (10),
**caractérisé en ce que**, lors de l'étape d'épandage (108), le produit à pulvériser (20) selon la quantité minimale définie par surface est en outre épandu sur une deuxième partie de champ (A1-E4) de la surface agricole (24), adjacente à la première partie de champ (A1-E4), sensiblement dans sa totalité dans la direction de déplacement (30) du dispositif de pulvérisation agricole (10), en fonction du premier indice de plante déterminé de la première zone d'évaluation (34), au moyen de l'unité à buse de pulvérisation (16) du dispositif de pulvérisation agricole (10).

2. Procédé (100) selon la revendication 1, **caractérisé en ce que**, lors de l'étape d'épandage (108), le produit à pulvériser (20) est épandu sur la deuxième partie de champ (A1-E4) indépendamment d'une évaluation d'une deuxième information d'image de la deuxième partie de champ (A1-E4), en particulier indépendamment d'une identification de plantes (22) dans une deuxième zone d'évaluation de la deuxième information d'image et/ou d'une détermination d'un deuxième indice de plante d'une deuxième zone d'évaluation de la deuxième information d'image.

3. Procédé (100) selon la revendication 1 ou 2, **caractérisé en ce que** la première zone d'évaluation (34) présente, dans la direction de déplacement (30), sensiblement la même longueur que la première information d'image (32) détectée.

4. Procédé (100) selon l'une quelconque des revendications précédentes, **caractérisé par** les étapes supplémentaires suivantes consistant à :
- détecter (110) une autre partie de champ (A1-E4) de la surface agricole (24), adjacente à la deuxième partie de champ (A1-E4) dans la direction de déplacement (30), au moyen de l'unité de détection optique (18, 18A-C), afin d'obtenir une autre information d'image (32) de l'autre partie de champ (A1-E4) ;
- identifier (112) des plantes (22) dans une autre zone d'évaluation (34) de l'autre information d'image (32) obtenue de l'autre partie de champ (A1-E4) au moyen de l'unité de commande (26) ;
- déterminer (114) un autre indice de plante de l'autre zone d'évaluation (34) en utilisant les plantes (22) identifiées dans l'autre zone d'évaluation (34) au moyen de l'unité de commande (26) ; et
- poursuivre (116) l'étape d'épandage (108) du produit à pulvériser (20) selon la quantité minimale définie par surface sur
o l'autre partie de champ (A1-E4) jusqu'à au moins une plante (22) identifiée en dernier dans la direction de déplacement (30) de l'autre zone d'évaluation (34) ; et/ou
o l'autre partie de champ (A1-E4) jusqu'à au moins l'autre zone d'évaluation (34) incluse ; et/ou
o l'autre partie de champ (A1-E4) sensiblement dans sa totalité en fonction de l'autre indice de plante déterminé au moyen de l'unité à buse de pulvérisation (16) du dispositif de pulvérisation agricole (10).

5. Procédé (100) selon la revendication 4, **caractérisé en ce que** l'autre zone d'évaluation (34) présente, dans la direction de déplacement (30), sensiblement la même longueur que l'autre information d'image (32) détectée ou une longueur inférieure à celle-ci.

6. Procédé (100) selon l'une quelconque des revendications précédentes, **caractérisé en ce que**, lors de l'étape d'épandage (108), le produit à pulvériser (20) est épandu en continu dans la direction de déplacement (30) au moins depuis une limite initiale de la première partie de champ jusqu'à au moins
- une limite d'extrémité de la deuxième partie de champ (A1-E4) ; et/ou
- la dernière plante (22) identifiée de l'autre zone d'évaluation (34) et/ou une limite d'extrémité de l'autre zone d'évaluation (34) ; et/ou
- la dernière plante (22) identifiée d'une autre zone d'évaluation (34) suivante et/ou une limite d'extrémité d'une autre zone d'évaluation (34) suivante, dans la mesure où le produit à pulvériser a été sur sensiblement la totalité de la ou des autres parties de champ (A1-E4) précédentes.

7. Procédé (100) selon l'une quelconque des revendications précédentes, **caractérisé en ce que**, lors de l'étape
- d'épandage (108), le produit à pulvériser (20) est épandu lorsqu'une valeur de seuil définie pour le premier indice de plante est atteinte et/ou n'est pas atteinte et/ou est dépassée, et/ou
- de poursuite (116) de l'étape d'épandage (108), le produit à pulvériser (20) est épandu lorsqu'une valeur de seuil définie pour l'autre indice de plante est atteinte et/ou n'est pas atteinte et/ou est dépassée.

8. Procédé (100) selon l'une quelconque des revendications précédentes, **caractérisé en ce que**
- le premier indice de plante représente un degré de couverture de la première partie de champ (A1-E4) par de matière végétale et/ou une quantité de matière végétale dans la première partie de champ (A1-E4) et/ou un nombre de plantes (22) identifiées dans la première partie de champ (A1-E4), et/ou
- l'autre indice de plante représente un degré de couverture de l'autre partie de champ (A1-E4) par de la matière végétale et/ou une quantité de matière végétale dans l'autre partie de champ (A1-E4) et/ou un nombre de plantes (22) identifiées dans l'autre partie de champ (A1-E4) .

9. Procédé (100) selon la revendication 8, **caractérisé en ce que**, lors de l'étape de
poursuite (116) de l'étape d'épandage (108), le produit à pulvériser (20) est épandu lorsque le degré de couverture est supérieur à zéro et/ou lors de l'identification d'au moins une plante (22).

10. Procédé (100) selon l'une quelconque des revendications précédentes, **caractérisé en ce que** la première partie de champ (A1-E4) et la deuxième partie de champ (A1-E4), en particulier en outre l'autre partie de champ (A1-E4), présentent sensiblement la même longueur et sensiblement la même largeur dans la direction de déplacement (30).

11. Procédé (100) selon l'une quelconque des revendications précédentes, **caractérisé par** une variante d'étape d'épandage (108') du produit à pulvériser (20) selon la quantité minimale définie par surface sur l'une des parties de champ (A1-E4) en fonction du fait de savoir
- si au moins une plante (22) est identifiée dans la partie de champ au moyen de l'unité de commande (26), et
- si un produit à pulvériser (20) est épandu et/ou doit être épandu dans la dans une partie de champ (A1-E4) voisine, adjacente transversalement à la direction de déplacement (30), au moyen d'une unité à buse de pulvérisation (16) voisine du dispositif de pulvérisation agricole (10).

12. Procédé (100) selon la revendication 11, **caractérisé en ce que**, lors de la variante d'étape d'épandage (108'), le produit à pulvériser (20) est épandu sur la partie de champ (A1-E4) respective sensiblement dans sa totalité, dans la mesure où au moins une plante (22), en particulier d'une taille définie, est identifiée dans la partie de champ (A1-E4) respective, et un produit à pulvériser (20) est épandu et/ou doit être épandu dans la partie de champ voisine (A1-E4) au moyen de l'unité à buse de pulvérisation voisine (16).

13. Unité de commande (26) qui est conçue pour exécuter et/ou commander les étapes suivantes consistant à :
- identifier (104) des plantes (22) dans une première zone d'évaluation (34) d'une première information d'image (32) obtenue d'une première partie de champ (A1-E4) d'une surface agricole (24) détectée au moyen d'une unité de détection optique ;
- déterminer (106) un premier indice de plante de la première zone d'évaluation (34) en utilisant les plantes (22) identifiées dans la première zone d'évaluation (34) ; et
- fournir en sortie un signal de commande à une unité à buse de pulvérisation (16) d'un dispositif de pulvérisation agricole (10) en fonction du premier indice de plante déterminé de la première zone d'évaluation (34), afin d'épandre un produit à pulvériser (20) selon une quantité minimale définie par surface sur la première partie de champ (A1-E4) de la surface agricole (24) sensiblement dans sa totalité,
**caractérisé en ce que**, lors de l'étape de fourniture en sortie du signal de commande, un signal de commande est fourni en sortie pour épandre en outre le produit à pulvériser (20) selon la quantité minimale définie par surface sur une deuxième partie de champ (A1-E4) de la surface agricole (24) du dispositif de pulvérisation agricole (10) sensiblement dans sa totalité, adjacente à la première partie de champ (A1-E4) dans la direction de déplacement (30) du dispositif de pulvérisation agricole (10) .

14. Dispositif de pulvérisation agricole (10) pour épandre un produit à pulvériser (20) sur une surface agricole, comprenant au moins une unité à buse de pulvérisation (16), au moins une unité de détection optique (18, 18A-C) et une unité de commande (26) selon la revendication 13.
